# EUROPEAN PATENT APPLICATION

(11) **EP 1 662 360 A2**
(43) Date of publication of application: **31.05.2006**
(21) Application number: 05257304.5
(22) Date of filing: 28.11.2005
(51) Int. Cl.: G06F 1/32

(54) **Recording/reproducing device**

(30) Priority: 30.11.2004 JP 2004346407
(71) Applicant: ORION ELECTRIC CO., Ltd., Fukui 915-8555 (JP)
(72) Inventor: Miyazaki, Hiroyuki, Orien electric Co. Ltd., Echinzen-city Fukui 915-8555 (JP)
(74) Representative: Paget, Hugh Charles Edward

(57) **Abstract**

To provide a recording/reproducing device for enabling a recording reservation to be set quickly and easily when the power is switched off. If the recording/reproducing device is switched off, power is still kept supplying to the microcomputer and key input is monitored; wherein a starting time of recording is set in response to input of a two-digit number, a channel is set in response to input of the next input two-digit number, or a channel is set to last channel data if the next two-digit number is not input; and wherein the same starting time of recording and the same ending time of recording as those of the program are set in preference to the other time settings if an EPG environment is present, or a predetermined recording time is set if no EPG environment is present.

## Description

### BACKGROUND OF THE INVENTION

### Field of the Invention

The present invention relates to a recording/reproducing device that enables recording reservation setting to be done quickly and simply in the switched off state.

### Description of the Related Art

Conventional techniques for facilitating a recording reservation include a magnetic recording/reproducing device disclosed in Japanese Patent Laid-Open Publication No. 6-290510 (patent document 1). With this device, a user can set a recording reservation by turning on the power switches of the magnetic recording/reproducing device and a display device and doing various types of setting operation on a menu screen.

Conventional techniques for enabling a recording reservation to be set even in the switched OFF state include a key input responding device shown in Japanese Patent Laid-Open Publication No. 7-154874 (patent document 2). With this device, a user can reserve recording only by setting a G code reservation if the power switch of the VTR is off.

Each of the abovementioned prior arts has problems.

The recording/reproducing device shown in the patent document 2 requires a user to check G code numbers on a newspaper or the like and input the number into the device. As a G code number consists of up to eight digits, or up to nine digits for accommodating I-CODE mode, a user has a trouble in inputting the number. As the number consists of meaningless series of numerals, it is difficult for a user to remember. They lead many input errors.

The recording/reproducing device shown in the patent document 1 (magnetic recording/reproducing device) requires both the recording/reproducing device and a displaying device to be switched on, and cannot be set a recording reservation in the switched off state. A user has to switch on the recording/reproducing device before setting reserved recording. The user also has to switch on the display device to switch the input to an external input. An operating method for setting a recording reservation requires a user to do many types of key-operation in selecting a recording reservation setting screen in a menu mode and doing many settings of a starting time, an ending time and the like. A user has a trouble in setting a reservation and needs much time in setting a reservation. This leads many input errors.

The conventional recording/reproducing device including the abovementioned two devices basically require a user to do recording reservation by checking input operation displayed on a screen with both of a recording/reproducing device and a display device in the switched on state. As the conventional devices require many types of key operation, a user actually has to check the input on a screen so as not to make a setting error.

### SUMMARY OF THE INVENTION

The present invention is adapted in view of the abovementioned problems and intends to provide a recording/reproducing device for enabling a recording reservation to be set quickly in quite simple operation with few input errors lead when the power is switched off.

A recording/reproducing device of the present invention according to claim 1 is characterized by comprising at least a key input means having numeric keys, a key input processing part for receiving key input from the key input means, a key determination processing part for determining whether it is a numeric key, a function key or the like at the key input processing part and sending the determination to each controlling part and each processing part, a reserved recording setting part for performing setting about reserved recording, a decode processing part for decoding (decrypting) the first and the second inputted numerals and setting a starting time of recording in the reserved recording setting part and if the third and the fourth numerals are inputted following to the first and the second numerals, decoding the third and the fourth numerals and setting a channel in the reserved recording setting part, a data obtaining part for obtaining data from an EPG or memory or a display device and sending the data to the reserved recording setting part and the like, a function controlling part for controlling each function in response to operation on the key input means, a controlling part, which is a CPU in a microcomputer, for performing each control and controlling over the entire device, a storage medium for recording images and sounds, and memory for storing each piece of data such as an initial value of the microcomputer and channel data; wherein all the functions of the key input processing part, the key determination processing part, the reserved recording setting part, the decode processing part, the data obtaining part, the function controlling part and the controlling part are processed by the microcomputer; wherein the recording/reproducing device is connected with a display device; wherein if the recording/reproducing device is switched off, power is still kept supplying to the microcomputer and the key input processing part keeps monitoring the presence of key input; wherein the key input processing part accepts input when the first numeric key is input at the key input means, and a time in 24-hours system indicated by a two-digit number is set as a starting time of recording when the following second numeric key is inputted, and the data obtaining part obtains last channel data from the memory or the display device and automatically sets the data for a channel to be recorded if the second key input is not followed by the third key input, and the key input processing part sets a channel indicated by a two-digit number as a channel to be recorded if the third and the fourth numeric keys are inputted following to the second numeric key, and the data obtaining part also obtains a starting time and an ending time of a program broadcasted in a time period starting at the starting time of recording the channel to be recorded and sets the starting time of recording and the ending time of recording in preference to the other time settings if the environment allows the data obtaining part to obtain program data from an EPG or the like, and the key input processing part recovers monitoring the presence of key input if input of numeric keys finishes at the second numeric key or if numeric keys are input to the fourth numeric key; the recording/reproducing device records a broadcast from the channel to be recorded on a storage medium in a recording mode used when the starting time of recording comes, finishes recording at the ending time of the program if the ending time of recording is set to the ending time of the program, and automatically finishes recording after a predetermined length of recording time passed or at the ending time after a predetermined length of time if no ending time of recording is set.

A recording/reproducing device of the present invention according to claim 2 is the recording/reproducing device according to claim 1, characterized by incorporating the same decode processing part as that of the recording/reproducing device in the abovementioned display device so that a user can set a reservation to the recording/reproducing device in the switched off state from the display device in the switched off state by using the key input means for the display device.

A recording/reproducing device of the present invention according to claim 3 is the recording/reproducing device according to claim 1 or 2, characterized in that a number inputted by key operation is displayed on a monitor of the recording/reproducing device when reserved recording is set on the recording/reproducing device in the switched off state.

A recording/reproducing device of the present invention according to claim 4 is the recording/reproducing device according to claim 1, 2 or 3, characterized in that recording can be set in a conventional manner such as manual recording, inputting on a menu screen or inputting of a G code, while the recording/reproducing device is switched on.

### BRIEF DESCRIPTION OF THE DRAWINGS

FIG. 1 is a block diagram showing an example of the present invention.
FIG. 2 is a flowchart showing an example of key input process.
FIG. 3 is a flowchart showing an example of timer interruption process.
FIG. 4 is a flowchart showing an example of reservation decoding process using data in the recording/reproducing device.
FIG. 5 is a flowchart showing an example of reservation decoding process using data in the display device.

### DETAILED DESCRIPTION OF THE PREFERRED EMBODIMENTS

Although the preferred embodiment for implementing the recording/reproducing device according to the present invention will be described with reference to drawings, the present invention is not limited to the embodiment.

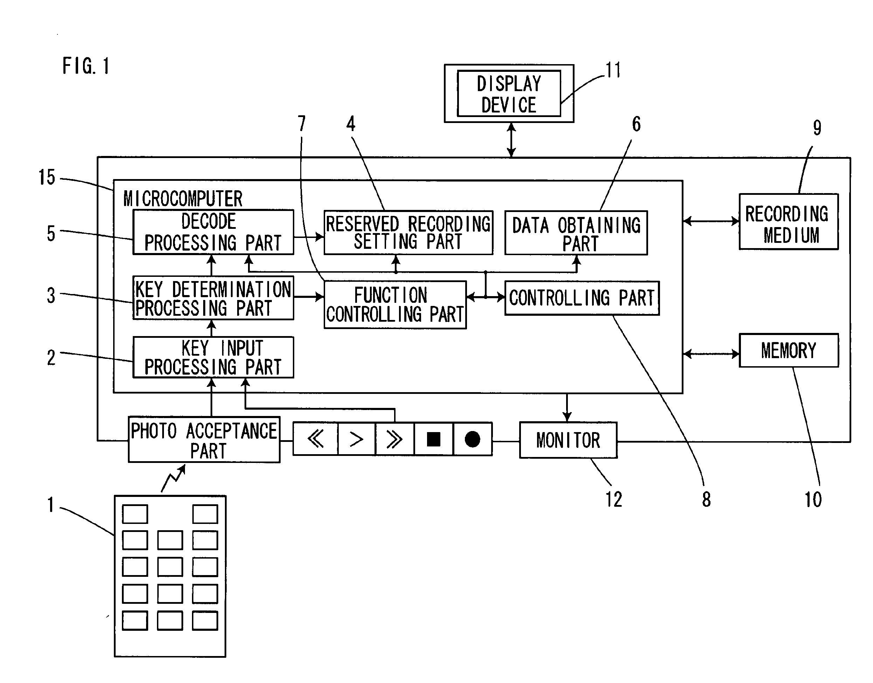

FIG. 1 is a block diagram of a device of the present invention. A key input means 1 having numbers may be keys on the body or keys on a remote controller of the recording/reproducing device.

All the functions of a key input processing part 2, a key determination processing part 3, a reserved recording setting part 4, a decode processing part 5, a data obtaining part 6, a function controlling part 7 and a controlling part 8 are processed by a microcomputer 15. The microcomputer 15 also has a timer interruption processing function. The key input processing part 2 accepts key input from the key input means 1. The key determination processing part 3 determines whether it is a numeric key, a function key or the like and sends the determination to the function controlling part 7 and the decode processing part 5. The reserved recording setting part 4 performs setting about reserved recording. The decode processing part 5 sets the starting time of recording obtained by decoding the first and the second inputted numbers in the reserved recording setting part 4 and if the third and the fourth numerals are inputted following to the first and the second numerals, sets a channel obtained by decoding the third and the fourth numerals in the reserved recording setting part. The data obtaining part 6 obtains data such as last channel data or a recording mode (XP, SP, EP) from an EPG or memory or a display device connected thereto and sends the data to the reserved recording setting part 4 and the like. The function controlling part 7 controls a function of each device in response to operation on the key input means 1 (controlling of recording on or reproducing from a recording medium 9, display control, control of recording to and reading from memory). The controlling part 8 is a CPU in a microcomputer 15, and controls each device and controls over the entire device (control the function controlling part 7, a reserved recording setting part 4, a data obtaining part 6, memory 10 and the like). The recording medium 9 is for recording images and sounds (hard disk, DVD, VTR or the like). The memory 10 stores each piece of data such as an initial value of the microcomputer 15 and channel data (non-volatile memory such as E2PROM or RAM) . All the functions of the key input processing part 2, the key determination processing part 3, the reserved recording setting part 4, the decode processing part 5, the data obtaining part 6, the function controlling part 7 and the controlling part 8 are processed by the microcomputer 15. The recording/reproducing device is connected with the display device 11 (a CRT, a liquid crystal, a PDP, a rear-production television or the like). The recording/reproducing device and the display device 11 can be integrated into a hybrid machine or can be connected by code connection, communication connection or the other methods.

If the recording/reproducing device is switched off, power is still kept supplying to the microcomputer 15 and the key input processing part 2 keeps monitoring the presence of key input. The key input processing part 2 accepts input when the first numeric key is input at the key input means 1, and a time in 24-hours system indicated by two-digit number is set as a starting time of recording when the following second numeric key is inputted, and the data obtaining part 6 obtains last channel data from the memory 10 or the display device and automatically sets the data for a channel to be recorded if the second key input is not followed by the third key input, and the key input processing part sets a channel indicated by two-digit number as a channel to be recorded if the third and the fourth numeric keys are inputted following to the second numeric key, and the data obtaining part 6 also obtains a starting time and an ending time of a program broadcasted in a time period starting at the starting time of recording the channel to be recorded and sets the starting time of recording and the ending time of recording if the environment allows the data obtaining part to obtain program data from an EPG or the like, and the key input processing part 2 returns to the key input process flow to monitor presence of key input by switching off interruption process if input of numeric keys finishes at the second numeric key or if numeric keys are input to the fourth numeric key.

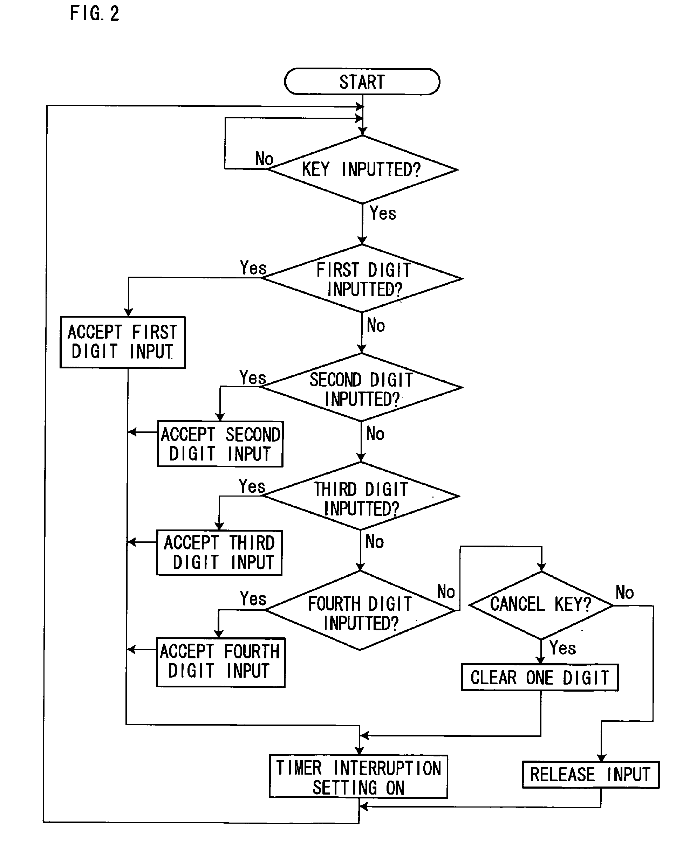

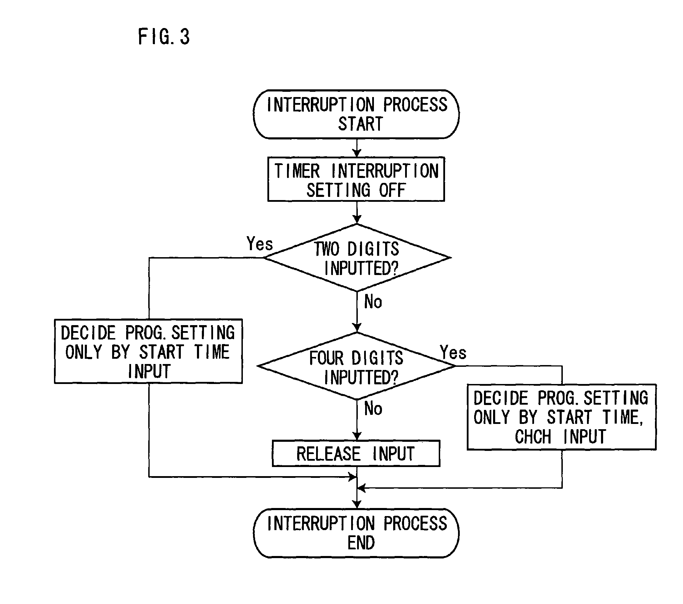

FIG. 2 is a flowchart showing a flow of "key input process". FIG. 3 is a flowchart showing a flow of "timer interruption process". When the recording/reproducing device is switched off, the "key input process" flow is always looped to monitor the presence of key input. When a key code is input by key operation on the key input means 1, it is considered that a key is input and timer interrupting setting is on for a predetermined time period. If key operation is performed to turn on timer interruption setting and the timer interruption occurs for a predetermined time in the "key input process" flow, in which the presence of key input is monitored in the switched off state, a position in the "key input process" flow is stored and operation jumps to the "timer interruption process" flow. When the flow switches to the "timer interruption process" flow, determination of "PROG. decision" meaning completion of operation for setting reserved recording or determination of "release input" meaning invalid decision of key operation in progress is performed. When "interruption process End" is reached in the "timer interruption process" flow, operation returns to the "key input process" flow and enters in the state of monitoring the presence of key input again. The "timer interruption" enables operation to jump to interruption process when a predetermined time passed in a general process of a CPU by setting a predetermined time in a hard function of the microcomputer 15 and turning an interruption request "ON". The position (program counter) in the general process can be stored in a stack to enable operation to be recovered from the interrupted position when the interruption ends. The CPU can be used for another process until an interruption request occurs, which reduces processing load. If a numeric key is pressed in the switched off state, time counting is set for a predetermined time period and two-digit numeric keys inputted in the predetermined time period are set to be decoded as the starting time of recording. After the predetermined time period passed, the recording/reproducing device automatically enters in a key input monitoring state. If only it is in a certain time period, cancel can be done by cancel key operation or the like and time count can be reset by another input of numeric keys for inputting anew, even when two digits are already input. A reserved recording can be decided by preparing and pressing a reserved recording decision key without setting time counting.

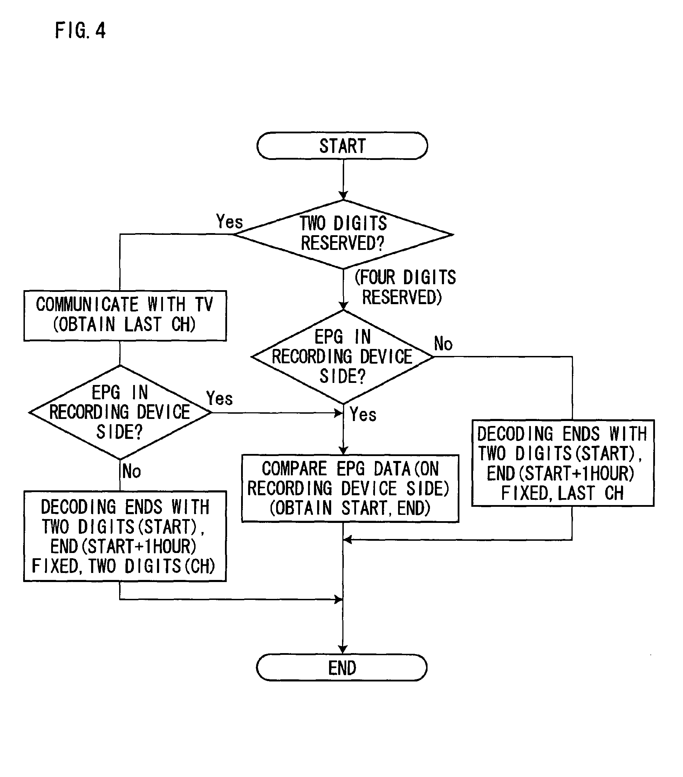

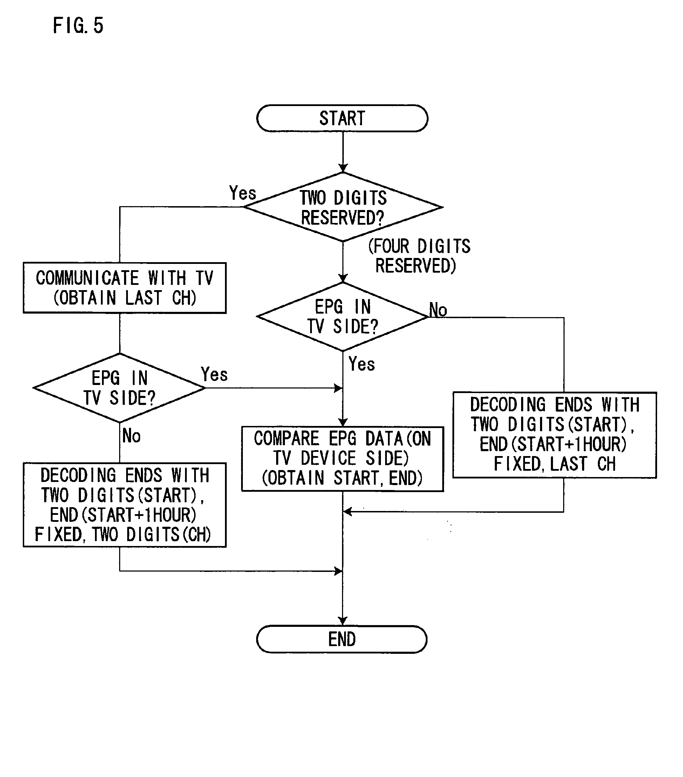

FIGS. 4 and 5 show reservation decoding process in the decoding process part 5. FIG. 4 is an example of using data in the recording/reproducing device, and FIG. 5 is an example of using data in the display device. With two-digit reservation key input (input of the first and the second numerals) or four-digit reservation key input (input of the first to the fourth numerals), reserved recording setting can be automatically processed by last channel data and the presence of EPG.

When the starting time of recording comes, the recording mode used at that time is used in recording a broadcast from the channel to be recorded is recorded in the recording medium 9. If the ending time of recording is set as the ending time of the program with obtained EPG data, recording ends when the broadcast of the program ends. If the ending time of recording is not set, recording automatically ends when a predetermined length of recording time, for example an hour, passed, or at the ending time set at a predetermined period from the starting.

With the same decode processing part 5 as that used in the recording/reproducing device of the present invention being incorporated in the microcomputer 15 or a circuit of the display device, the display device 11 can be used as an interface of the recording/reproducing device. Reserved recording setting can be made to the recording/reproducing device in the switched off state from the display device 11 in the switched off state with a remote controller of a key input means 1 for the display device 11.

A monitor 12, which is a little window of the recording/reproducing device in the switched off state, displays numeral key input state at the reserved recording setting operation. This prevents a key input error.

Specific operation for a user of the recording/reproducing device of the present invention is to check that the power switches of the recording/reproducing device and the display device 11 are turned off as the present invention assumes that the power switches are in the off state, then to input a two-digit or four-digit number by operating numeral keys on the key input means 1. Reserved recording has set by the above operation. When the power switches are on, recording setting can be done in the same manner as that in the general recording/reproducing device.

According to the present invention, reserved recording can be set quickly and simply when a recording/reproducing device and a display device are in the switched off state. When the recording/reproducing device is switched on, a reservation is set by the same reserved recording setting operation as that of a general recording/reproducing device (setting on a menu screen or inputting of a G code). When the recording/reproducing device is switched off, reserved recording setting according to the present invention is available.

A user can set reserved recording in quite simple and quick operation as the user can complete the setting by operating numeric keys to input only two-digit key codes. If a user is quick in key operation, the user can set reserved recording no more than a second. If a user knows the starting time of a program to record, or when a user hurries to set a reservation, this is quite helpful as it enables the user to set reserved recording easily and quickly. A recording medium is growing in capacity and users are getting to record a program more easily and frequently. The present invention will be more effective as it enables a user to set reserved recording quickly and easily by only two times of key operation even if the device is in the switched off state. In order to record a program starting at eight o'clock, the user only needs to input "08", and to record a program starting at twenty-one o'clock, the user only needs to input "21" to make reserved recording set automatically.

Last channel data can be obtained from the recording/reproducing device or from the display device, according to setting.

The present invention is more convenient than prior arts, as the present invention incorporates a decoding part in the display device so that a user can use a remote controller of the display device, which is generally used more frequently than the recording/reproducing device, to set reserved recording to the recording/reproducing device from the display device.

If a user wants to set a channel to be recorded as the channel the user wants to record is different from the last channel data, the user can easily and quickly set reserved recording only by operating numeric keys to input a four-digit key code. If the user is quick in key operation, the user can set reserved recording no more than two seconds. In order to record a program starting at ten o'clock at three channel, the user only needs to input "1003", and to record a program starting at twenty-three o'clock at ten channel, the user only needs to input "2310" to make reserved recording set automatically.

If the environment allows a user to use EPG data, the present invention can make reserved recording a program from the starting to the ending of the program by obtaining program data in a time period of a time designated by two-digit number inputted by the user. If program data is from 19:15 to 19:45 in an hour from nineteen o'clock to twenty o'clock, a user only needs to input "19" designating nineteen o'clock, for example, and the present invention can obtain the program data and automatically set to make reserved recording from 19:15 to 19:45. If multiple programs are planned in an hour from nineteen o'clock to twenty o'clock, such as one from 19: 00 to 19: 30 and another is planned for twenty minutes from 19:30, a user can set recording.

Even in the switched off state, a user can set reserved recording as checking key input process on a monitor 12 of the recording/reproducing device. This can prevent an input error. This is particularly convenient when the display device is in the switched off state.

The present invention requires no extra cost as it can be implemented only by software processing in a microcomputer.

## Claims

1. A recording/reproducing device **characterized by** comprising at least a key input means having numeric keys, a key input processing part for receiving key input from the key input means, a key determination processing part for determining whether it is a numeric key, a function key or the like at the key input processing part and sending the determination to each controlling part and each processing part, a reserved recording setting part for performing setting about reserved recording, a decode processing part for decoding the first and the second inputted numerals and setting a starting time of recording in the reserved recording setting part and if the third and the fourth numerals are inputted following to the first and the second numerals, decoding the third and the fourth numerals and setting a channel in the reserved recording setting part, a data obtaining part for obtaining data from an EPG or memory or a display device and sending the data to the reserved recording setting part and the like, a function controlling part for controlling each function in response to operation on the key input means, a controlling part, which is a CPU in a microcomputer, for performing each control and controlling over the entire device, a storage medium for recording images and sounds, and memory for storing each piece of data such as an initial value of the microcomputer and channel data; wherein all the functions of the key input processing part, the key determination processing part, the reserved recording setting part, the decode processing part, the data obtaining part, the function controlling part and the controlling part are processed by the microcomputer; wherein the recording/reproducing device is connected with a display device; wherein if the recording/reproducing device is switched off, power is still kept supplying to the microcomputer and the key input processing part keeps monitoring the presence of key input; wherein the key input processing part accepts input when the first numeric key is input at the key input means, and a time in 24-hours system indicated by a two-digit number is set as a starting time of recording when the following second numeric key is inputted, and the data obtaining part obtains last channel data from the memory or the display device and automatically sets the data for a channel to be recorded if the second key input is not followed by the third key input, and the key input processing part sets a channel indicated by a two-digit number as a channel to be recorded if the third and the fourth numeric keys are inputted following to the second numeric key, and the data obtaining part also obtains a starting time and an ending time of a program broadcasted in a time period starting at the starting time of recording the channel to be recorded and sets the starting time of recording and the ending time of recording in preference to the other time setting if the environment allows the data obtaining part to obtain program data from an EPG or the like, and the key input processing part recovers monitoring the presence of key input if input of numeric keys finishes at the second numeric key or if numeric keys are input to the fourth numeric key; the recording/reproducing device records a broadcast from the channel to be recorded on a storage medium in a recording mode used when the starting time of recording comes, finishes recording at the ending time of the program if the ending time of recording is set to the ending time of the program, and automatically finishes recording after a predetermined length of recording time passed or at the ending time after a predetermined length of time if no ending time of recording is set.

2. The recording/reproducing device according to claim 1, **characterized by** incorporating the same decode processing part as that of the recording/reproducing device in said display device so that a user can set a reservation to the recording/reproducing device in the switched off state from the display device in the switched off state by using the key input means for the display device.

3. The recording/reproducing device according to claim 1 or 2, **characterized in that** a number inputted by key operation is displayed on a monitor of the recording/reproducing device when reserved recording is set on the recording/reproducing device in the switched off state.

4. The recording/reproducing device according to claim 1, 2 or 3, **characterized in that** recording can be set in a conventional manner such as manual recording, inputting on a menu screen or inputting of a G code, while the recording/reproducing device is switched on.
